Europäisches Patentamt

(19) European Patent Office

Office Européen des brevets

(11) Publication number : **0 225 010 B1**

# EUROPEAN PATENT SPECIFICATION

(45) Date of publication of patent specification :
02.01.91 Bulletin 91/01

(51) Int. Cl.⁵ : **G07F 7/10, H04L 9/30**

(21) Application number : 86307433.2

(22) Date of filing : 26.09.86

(54) A terminal for a system requiring secure access.

(30) Priority : 30.09.85 GB 8524020

(43) Date of publication of application :
10.06.87 Bulletin 87/24

(45) Publication of the grant of the patent :
02.01.91 Bulletin 91/01

(84) Designated Contracting States :
AT BE CH DE FR GB IT LI LU NL SE

(56) References cited :
EP-A- 68 805
EP-A- 0 064 779
EP-A- 0 148 960
WO-A-81/02655
GB-A- 2 020 513
US-A- 4 438 824
IBM TECHNICAL DISCLOSURE BULLETIN,
vol. 24, no. 7B, December 1981, pages
3906-3909, New York, US; R. E. LENNON et al.:
"PIN protection/verification for electronic
funds transfer"

(56) References cited :
DATA COMMUNICATIONS, vol. 14, no. 7, June
1985, pages 213-225, New York, US; M.
NEUMAN: "Financial users can bank on new
security standard X9.17"
Communications of the A.C.M. (Feb. 78), vol.
21, n 2, pp. 120-121; R.L. RIVEST et al: "A
method for obtaining digital signatures and
public-key cryptosystems"
McGraw-Hill Encyclopedia of Electronics and
Computers (1984), pp. 179-180, Chapters
"Cryptography" and "Privacy and
authentication"

(73) Proprietor : BRITISH TELECOMMUNICATIONS
public limited company
81 Newgate Street
London EC1A 7AJ (GB)

(72) Inventor : Serpell, Stephen Charles
9 Freehold Road
Ipswich Suffolk (GB)
Inventor : Rout, Peter Allen
10 Ernleigh Road
Ipswich Suffolk (GB)

(74) Representative : Lloyd, Barry George William
et al
Intellectual Property Unit British Telecom
Room 1304 151 Gower Street
London WC1E 6BA (GB)

Note : Within nine months from the publication of the mention of the grant of the European patent, any
person may give notice to the European Patent Office of opposition to the European patent granted.
Notice of opposition shall be filed in a written reasoned statement. It shall not be deemed to have been
filed until the opposition fee has been paid (Art. 99(1) European patent convention).

## Description

The invention relates to : a terminal for a system requiring secure access, the terminal having means capable of reading data stored in a card or other token, means for entry by the card user of a personal identifier, and means for encrypting the personal identifier prior to transmission to a checking entity ; or a system requiring secure access including such a terminal.

The invention particularly relates to a terminal for a system for the electronic transfer of funds, and although not limited to terminals for such systems, will be described with reference to such systems.

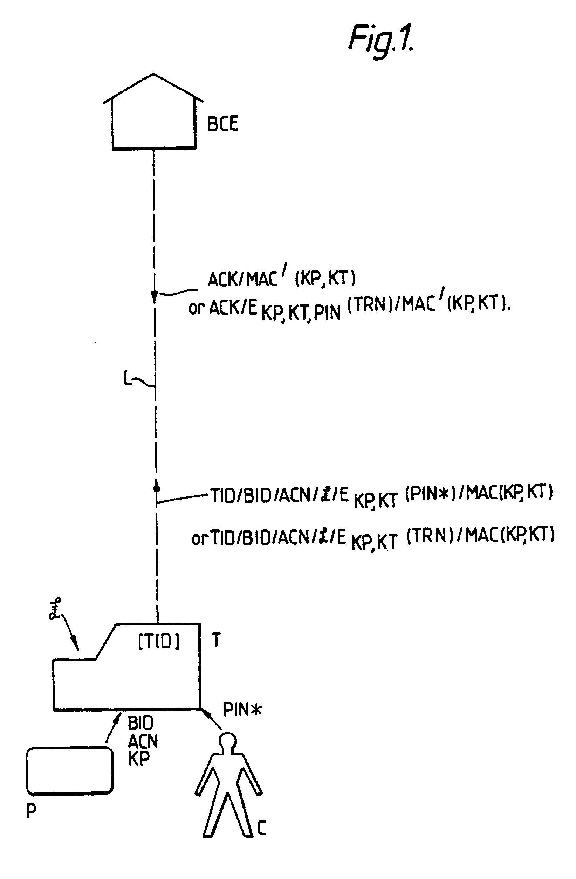

Figure 1 illustrates a known electronic funds transfer system. A terminal T is assumed to be located at a retailer's premises for goods purchased there, though the identity of the recipient of the funds to be transferred is not material ; the system might also be applied to a cash dispensing machine.

The terminal has a card reader for reading a card P presented by a customer C. The terminal T communicates with the bank that issued the card, or the entity performing checking on behalf of the bank - indicated as bank checking entity BCE - or a centre acting on its behalf, by a telecommunications link L. The terminal has input means, such as a keyboard, for entering data relating to the transaction, such as the amount to be transferred, and for entering the customer's personal identifier.

The transfer of funds from the card-issuing bank to the retailer's bank can be carried out by any convenient means and is not described here.

In order to minimise fraud, it is necessary that the bank should adequately verify the card and the customer. It is also necessary that the retailer's terminal can verify that the bank is genuine.

The extent to which each piece of equipment involved in the process can be regarded as secure depends on the security of the premises on which it is located ; thus while the bank may be regarded as "trusted", the terminal T and link L are not.

The customer's personal identifier - generally a number (often abbreviated PIN) is regarded as particularly confidential and in the arrangement shown is encrypted before transmission to the bank for checking. The message format used is indicated in the figures and comprises terminal identity (TID) (stored in the terminal), bank identity (BID), and account number (ACN) (both read from the card), the number to be transferred (£) (entered into the terminal) and the customer identifier entered into the terminal by the customer (this is designated PIN* since it may or may not be the true identifier).

This latter is encrypted using an encryption algorithm in dependence on two keys ; a terminal key KT and a key KP stored on the card. This ensures that the encoded personal identifier can be decrypted only by the bank and also serves to verify both the terminal and the card.

Encryption, here and below, is indicated by a letter E with the key(s) shown as subscripts and the data to be encrypted in brackets.

The message is further verified by a message authentication code MAC which is a cryptographic checksum of the message and is generated using KP and KT ie MAC (KP,KT). (The encrypted PIN could be reproduced verbatim by an eavesdropper and does not itself provide sufficient verification).

The bank decrypts the personal identifier and authentication code and acknowledges the message, appending a similar authentication code, ie MAC′ (KP, KT), which serves to verify to the terminal that the bank is genuine since only the bank would "know" both KP and KT.

EP-A-0068805 discloses an encrypted fund transaction system employing a MAC.

An alternative, permitting the personal identifier comparison to be carried out at the terminal (thereby speeding up the procedure if the customer makes an error in entry) - but without disclosing the identifier to the terminal involves the terminal sending to the bank the same message as before but with a random number TRN substituted for the personal identifier viz TID/BID/ACN/£/$E_{KP, KT}$(TRN)/MAC (KP, KT). When the bank acknowledges it returns the random number encrypted using KP, KT and the true identifier PIN as keys, ie $E_{KP, KT, PIN}$(TRN). The terminal has available KP, KT and TRN the nature of the encryption is such that the terminal cannot decrypt the PIN ; it can, however encrypt the identifier PIN* offered by the customer and compare it with that sent by the bank, ie the comparison : $E_{KP, KT, PIN*}$(TRN)$= E_{KP, KT, PIN}$(TRN) ?

The system described with reference to Figure 1 requires a key KP stored on the customers card ; cards currently in use do not contain such a key and the present invention offers a secure alternative which does not require this.

The concept of public key cryptosystems will now be introduced. The public key system involves encryption of a message by a sender using a first (public) key $E^P_{PK}$, which can then be decoded by the recipient using a second (different) key known only to him (the private key $E^P_{SK}$) ($E^P$ denotes encryption using a public key system). The second key cannot be deduced from the first - at least not without a prohibitive amount of computation. Thus anyone possessing the public key can send a message knowing that it will be understood only by the intended recipient.

In public key systems the recipient will normally transmit his public key in encrypted form to a sender at the beginning of a transaction to avoid the necessity for the sender to store large numbers of keys ; however, a possibility of fraud arises if a pirate recipient X intercepts a message from a sender B whilst claiming to be the bona fide recipient A. X cannot send A's

public key as then B's reply would be unintelligible to him since X does not know A's secret key. So X offers A's identity but his own (X's) public key. This danger can be avoided by the converse use of public key encryption in which a message is encrypted using a private key and decrypted using a public key, so that the message is authenticated as to its source (analogous to a signature). This involves the recipient appending a "certificate" to his message. The certificate is a encryptographic checksum of the recipient's identity and his public key (plus, optionally, any other derived data), encrypted using a certification private key known only to a "certification server" and not to A, B or X who, however, know the certification public key and how to calculate the cryptographic checksums, and so B (in this case) can decrypt the certificate and check that the alleged identity and key correspond.

One public key cryptography system, for electronic mail, described in "A Method for Obtaining Digital Signatures and Public Key Cryptosystems", Rivesl et al - Communications of the ACM Feb. 1978, vol. 21, No. 2 pp120, uses a public key cryptosystem to "bootstrap" into a standard (non public key) system such as the National Bureau of Standards method ; the first message transmitted is the NBS key, encoded in a public encryption key.

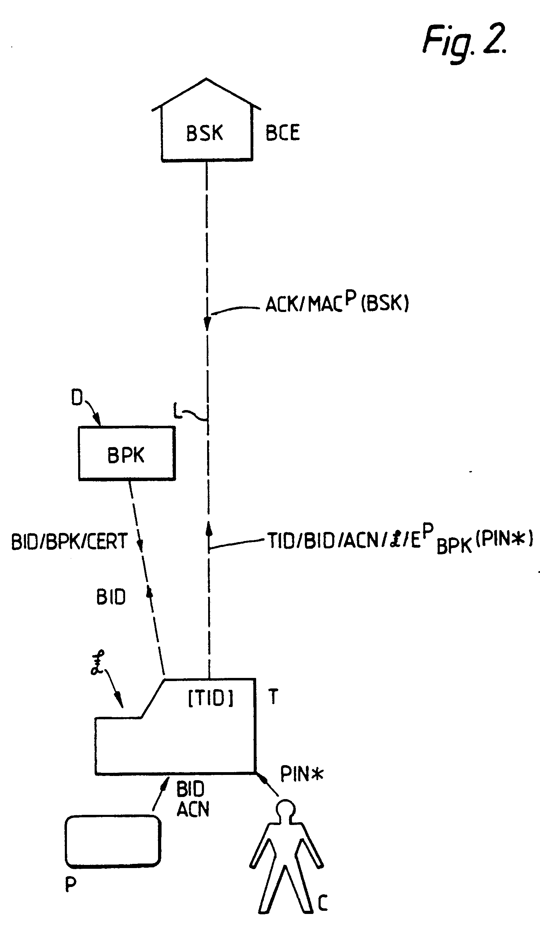

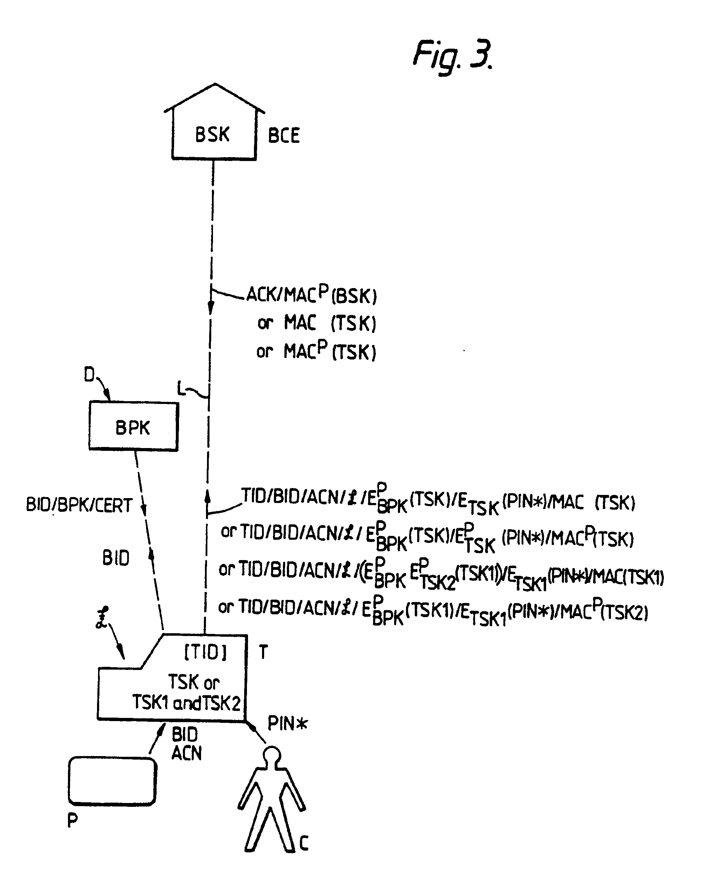

Figure 2 illustrates a known electronic funds transfer system using a public key cryptosystem. Although similar to Figure 1, it differs in that in place of the keys KP and KT it employs bank public and secret keys BPK and BSK. The personal identifier PIN* is encrypted at the terminal using the bank's public key BPK (the corresponding secret key BSK is known only to the bank). BPK could be stored in the terminal, or obtained from a central directory D. Either way the bank's public key is stored with the corresponding certificate so that it can be verified by the terminal before use.

The terminal is then able to send a secure message to the bank ie TID/BID/ACN/£/$E^P_{BPK}(PIN^*)$, where the bank checking entity BCE can decrypt the message. The bank can then check the PIN*, transfer the funds requested and acknowledge the transfer. The acknowledgement can include a message authentification code using the bank secret key, ie ACK/$MAC^P(BSK)$, to prove to the terminal that it is genuine.

The system described with reference to Figure 2 does not require a key stored on the customers card, but suffers from the drawback that the terminal is not authenticated to the bank.

According to the invention there is provided a terminal for the system requiring secure access, the terminal having means capable of reading data stored in a card or other token, means for entry by the card user of a personal identifier, and means for encrypting the personal identifier prior to transmission to a checking entity, characterised in that the personal identifier is encrypted by means of a selected key, that key being transmitted, after encryption using a public key corresponding to a secret decryption key held by the checking entity, along with the encrypted personal identifier.

Also according to the invention there is provided a system requiring secure access including such a terminal.

The invention will now be described by way of example with reference to Figure 3. Although similar to Figure 2, it differs in that it additionally employs a terminal selected key TSK. This selected key may be a conventional key (like KP and KT), for instance a random or pseudo random number or a private key (corresponding to a public key TPK). In either case the personal identifier PIN* is encrypted using the selected key, ie $E^P_{TSK}(PIN^*)$ or $E^P_{TSK}(PIN^*)$, and the selected key is encrypted using the bank public key, ie $E^P_{BPK}(TSK)$ ; both are then sent with the message to the bank.

A message authentification code may be generated using the selected key, ie MAC(TSK) or $MAC^P(TSK)$, and also sent to the bank. In this way the bank is able to verify that the terminal is genuine.

In an embodiment having additional security the terminal may have a selected conventional key TSK1, and a private key TSK2. In this embodiment the personal identifier PIN* may be encrypted using the conventional key TSK1, ie $E_{TSK1}(PIN^*)$, and this key may be encrypted using the terminal private key TSK2 and then with the bank's public key, ie $E^P_{BPK}(E^P_{TSK2}(TSK1))$. In this case the MAC may be generated by the conventional key MAC (TSK1) or the private key, $MAC^P(TSK2)$. However, it should be noted that the conventional key does not have to be encrypted by TSK2 before encryption by BPK, in which case the terminal private key can be used to generate only the MAC, $MAC^P(TSK2)$.

In the case where the selected key is a private key it may not be efficient for the bank to store the corresponding public key (TPK) for all the terminals concerned ; and in this case the message from the terminals to the bank should include the relevant public key together with a certificate, ie TID/...../$E^P_{TPK}$/CERT....

The bank responds to messages from the terminals by sending an acknowledgement ACK, and additionally a message authentification code to prove that the bank is genuine. This MAC may take the form of $MAC^P(BSK)$ or MAC(TSK) or $MAC^P(TSK)$ (depending on whether TSK is a conventional or private key).

Again the alternative of sending a random number TRN instead of PIN* and carrying out the personal identifier checking at the terminal may be used. For example the terminal sends TRN encrypted with XX, $E_{XX}(TRN)$ instead of $E_{XX}(PIN^*)$ and the bank then returns $E_{XX,PIN}(TRN)$.

At this point it should be recalled that the terminal itself is regarded as "not trusted". Therefore the route between the keypad (or other means) for input of the personal identifier PIN and the means for encryption of the PIN needs to be 'secured' in some way and normally the two will be contained in a physically secure sub-unit within the terminal.

The checking entity CE is referred to as such since although it could in fact be checking equipment located at the card issuing bank - or at some other site, other options are possible. One of particular interest is the possibility of digital processing capability within the card itself - the so-called "smart card". In this instance the PIN checking entity could be incorporated in the card itself - though of course transaction information will still have to be exchanged between the terminal and the bank (though not necessarily at the time of the transaction).

Thus the smart card could itself contain the identifier PIN which can then be internally compared with $EP_{BPK}(PIN^*))$, or, as described above, the comparison could be carried out in the terminal.

Note throughout that the encrypted forms of PIN (or PIN*) or related random numbers may be required to be different for each transaction. This may be achieved by either (i) combining the PIN (or PIN related) data with other, variant, data prior to encryption, or (ii) modifying the encrypting key every transaction, or (iii) both.

Finally it should be pointed out that though the customer's personal identifier may be a number, biometric means - such as an automatic fingerprint reader - may be used.

## Claims

1. A terminal (T) for a system requiring secure access, the terminal (T) having means capable of reading data stored in a card (P) or other token, means for entry by the card user (C) of a personal identifier (PIN), and means for encrypting the personal identifier (PIN) prior to transmission to a checking entity (BCE), characterised in that, the personal identifier is encrypted by means of a selected key (TSK), that key being transmitted, after encryption using a public encryption key (BPK) corresponding to a secret decryption key (BSK) held by the checking entity, along with the encrypted personal identifier.

2. A terminal according to claim 1 in which the selected key (TSK) is a random or pseudo-random number (TSK1).

3. A terminal according to claim 1 in which the selected key is a secret encryption key held by the terminal.

4. A terminal according to claim 2 in which a secret encryption key (TSK2) held by the terminal is used to encrypt the selected key (TSK1) prior to the public key encryption.

5. A terminal according to claims 2, 3 or 4 arranged in operation to append to its transmissions a cryptographic checksum (MAC) of the message generated using the selected key (TSK) whereby the message content and origin may be verified upon receipt.

6. A terminal according to claim 2 arranged in operation to append to its transmissions a cryptographic checksum (MAC) of the message generated using a secret encryption key (TSK2) held by the terminal whereby the message content and origin may be verified upon receipt.

7. A terminal according to claim 4 arranged in operation to append to its transmissions a cryptographic checksum (MAC) of the message generated using said secret encryption key (TSK2) whereby the message content and origin may be verified upon receipt.

8. A terminal according to claims 3, 4, 6 or 7 in which information encrypted by the terminal using a secret private encryption key is accompanied by the corresponding public decryption key (TPK) together with a certificate (CERT).

9. A terminal according to any one of the preceding claims, including means for communication with the card (P) or other token, in which the checking entity is located.

10. A system requiring secure access including a terminal according to any one of the preceding claims.

## Revendications

1. Un terminal (T) pour un système exigeant un accès protégé, le terminal (T) possédant des moyens susceptibles de lire des données mémorisées dans une carte (P) ou un autre jeton, des moyens destinés à l'introduction, par l'utilisateur (C) de la carte, d'un élément d'identification personnel (PIN) et des moyens destinés à chiffrer l'élément d'identification personnel (PIN) avant la transmission à une entité de vérification (BCE), caractérisé en ce que l'élément d'identification personnel est chiffré au moyen d'une clé choisie (TSK), cette clé étant transmise, après chiffrage utilisant une clé publique de chiffrage (BPK) correspondant à une clé secrète de décryptage (BSK) tenue par l'entité de vérification, en même temps que l'élément d'identification personnel chiffré.

2. Un terminal selon la revendication 1 dans lequel la clé choisie (TSK) est un nombre aléatoire ou pseudo-aléatoire (TSK1).

3. Un terminal selon la revendication 1 dans lequel la clé choisie est une clé secrète de chiffrage tenue par le terminal.

4. Un terminal selon la revendication 2 dans lequel une clé secrète de chiffrage (TSK2) tenue par le terminal est utilisée pour chiffrer la clé choisie (TSK1) avant le chiffrage avec la clé publique.

5. Un terminal selon les revendications 2, 3 ou 4 agencé pour ajouter à ses transmissions, en fonctionnement, un contrôle par totalisation cryptographique (MAC) des messages engendrés en utilisant la clé choisie (TSK) grâce à quoi le contenu et l' origine du message peuvent être vérifiés à réception.

6. Un terminal selon la revendication 2 agencé pour ajouter à ses transmissions, en fonctionnement, un contrôle par totalisation cryptographique (MAC) du message engendré en utilisant une clé secrète de chiffrage (TSK2) tenue par le terminal grâce à quoi le contenu et l'origine du message peuvent être vérifiés à réception.

7. Un terminal selon la revendication 4 agencé pour ajouter à ses transmissions, en fonctionnement, un contrôle par totalisation cryptographique (MAC) du message engendré en utilisant ladite clé secrète de chiffrage (TSK2) grâce à quoi le contenu et l'origine du message peuvent être vérifiés à la réception.

8. Un terminal selon la revendication 3, 4, 6 ou 7 dans lequel l'information chiffrée dans le terminal en utilisant une clé secrète privée de chiffrage est accompagnée par la clé publique de décryptage correspondante (TPK) en même temps que d'un certificat (CERT).

9. Un terminal selon l'une quelconque des revendications précédentes, conprenant des moyens pour communiquer avec la carte (P) ou un autre jeton, dans lequel est située l'entité de vérification.

10. Un système exigeant un accès protégé comprenant un terminal selon l'une quelconque des précédentes revendications.

## Ansprüche

1. Ein Anschluß (T) für ein System, das einen sicheren Zugriff erfordert, wobei der Anschluß (T) aufweist : eine Einrichtung, die auf einer Karte (P) oder einer andren Berechtigungsmarke gespeicherte Daten lesen kann, eine Einrichtung zum Eingeben einer persönlichen Kennung (PIN) durch den Kartenbenutzer (C), und eine Einrichtung zum Codieren der persönlichen Kennung (PIN) vor einer Übertragung zu einer Prüfstelle (BCE), dadurch gekennzeichnet, daß die persönliche Kennung mittels eines ausgewählten Schlüsselwortes (TSK) codiert wird, wobei jenes Schlüsselwort nach einem Codieren unter Verwendung eines Öffentilichen Codierschlüsselwortes (BPK) übertragen wird, das einem geheimen Decodierschlüsselwort (BSK) entspricht, das durch die Prüfstelle gemeinsam mit der codierten persönlichen Kennung gehalten wird.

2. Anschluß nach Anspruch 1, bei dem das ausgewählte Schlüsselwort (TSK) eine Zufalls- oder Pseudozufallszahl (TSK1) ist.

3. Anchluß nach Anspruch 1, bei dem das ausgewählte Schlüsselwort ein geheimes Codierschlüsselwort ist, das durch den Anschluß gehalten wird.

4. Anschluß nach Anspruch 2, bei dem ein geheimes Decodierschlüsselwort (TSK2), das durch den Anschluß gehalten wird, benutzt wird, um das ausgewählte Schlüsselwort (TSK1) vor dem Codieren des öffentlichen Schlüsselwortes zu codieren.

5. Anschluß nach den Ansprüchen 2, 3 oder 4, der im Betrieb eingerichtet ist, um seinen Übertragungen eine kryptografische Prüfsumme (MAC) der Nachricht anzuhängen, die unter Verwendung des ausgewählten Schlüsselwortes (TSK) erzeug ist, wodurch der Nachrichteninhalt und der Ursprung auf einen Empfang hin bestätigt werden kann.

6. Anschluß nach Anspruch 2, der im Betried eingerichtet ist, um seinen Übertragungen eine kryptografische Prüfsumme (MAC) der Nachricht anzuhängen, die unter Verwendung eines gheimen Codierschlüsselwortes (TSK2) erzeugt ist, das durch den Anschluß gehalten ist, wodurch der Nachrichteninhalt und der Ursprung auf einen Empfang hin bestätigt werden können.

7. Anschluß nach Anspruch 4, der im Betrieb eingerichtet ist, um seinen Übertragungen eine kryptografische Prüfsumme (MAC) der Nachricht anzuhängen, die unter Verwendug des geheimen Codierschlüsselwortes (TSK2) erzeugt ist, wodurch der Nachrichteninhalt und der Ursprung auf einen Empfang hin bestätigt werden Können.

8. Anschluß nach den Ansprüchen 3, 4, 6 oder 7, bei dem eine Information, die durch den Anschluß unter Verwendug eins geheimen privaten Codierschlüsselwortes codiert ist, durch das entsprechende öffentliche Decodierschlüsselwort (TPK) zusammen mit einem Zertifikat (CERT) begleitet ist.

9. Anschluß nach einem der vorangehenden Ansprüche, der eine Einrichtung für eine Kommunikation mit der Karte (P) oder anderen Berechtigungsmarken enthält, in der die Prüfstelle angeordnet ist.

10. System, das einen sicheren Zugriff erfordert, das einen Anschluß gemäß+einem der vorangehenden Ansprüche enthält.

*Fig.1.*

BCE

$ACK/MAC'(KP, KT)$
or $ACK/E_{KP, KT, PIN}(TRN)/MAC'(KP, KT).$

$TID/BID/ACN/\mathcal{L}/E_{KP, KT}(PIN*)/MAC(KP, KT)$

or $TID/BID/ACN/\mathcal{L}/E_{KP, KT}(TRN)/MAC(KP, KT)$

[TID]   T

PIN*

BID
ACN
KP

P

C

6

*Fig. 2.*

# Fig. 3.

BSK    BCE

ACK/MAC$^P$(BSK)
or MAC (TSK)
or MAC$^P$(TSK)

D

BPK

BID/BPK/CERT

BID

TID/BID/ACN/$\ell$/E$^P_{BPK}$(TSK)/E$_{TSK}$(PIN*)/MAC (TSK)

or TID/BID/ACN/$\ell$/ E$^P_{BPK}$(TSK)/E$^P_{TSK}$ (PIN*)/MAC$^P$(TSK)

or TID/BID/ACN/$\ell$/(E$^P_{BPK}$ E$^P_{TSK2}$(TSK1))/E$_{TSK1}$(PIN*)/MAC(TSK1)

or TID/BID/ACN/$\ell$/ E$^P_{BPK}$(TSK1)/E$_{TSK1}$(PIN*)/MAC$^P$(TSK2)

$\ell$

[TID]    T

TSK or
TSK1 andTSK2

BID
ACN

PIN*

P

C